# EUROPEAN PATENT SPECIFICATION

(11) **EP 2 611 618 B1**
(45) Date of publication and mention of the grant of the patent: **24.04.2019**
(21) Application number: 10856811.4
(22) Date of filing: 02.09.2010
(51) Int. Cl.: B41J 29/38, G01N 21/47, B41J 2/165, B41J 2/21, B41J 2/195, G01N 21/53

(54) **DROP DETECTOR ASSEMBLY AND METHOD**
TROPFENDETEKTORMONTAGE UND VERFAHREN
ENSEMBLE DÉTECTEUR DE GOUTTE ET PROCÉDÉ ASSOCIÉ

(43) Date of publication of application: 10.07.2013
(73) Proprietor: Hewlett-Packard Development Company, L.P., Houston, TX 77070 (US)
(72) Inventor: GOVYADINOV, Alexander, Corvallis Oregon 97330 (US); VAN BROCKLIN, Andrew, L., Houston, TX 77070 (US); SCHULTE, Donald, W., Corvallis Oregon 97330 (US); MCMAHON, Terry, Corvallis Oregon 97330 (US)
(74) Representative: Zimmermann, Tankred Klaus
(86) International application number: PCT/US2010/047637
(87) International publication number: WO 2012/030344

(56) References cited:
- EP-A1- 1 369 238
- EP-A1- 2 145 768
- US-A1- 2002 101 469
- US-A1- 2009 244 141
- US-A1- 2009 244 141
- US-A1- 2009 244 151
- US-A1- 2009 244 163
- US-A1- 2010 207 989

## Description

### BACKGROUND

An inkjet printer is a fluid ejection device that provides drop-on-demand ejection of fluid droplets through printhead nozzles to print images onto a print medium, such as a sheet of paper. Inkjet nozzles can become clogged and cease to operate correctly, and nozzles that do not properly eject ink when expected can create visible print defects. Such print defects are commonly referred to as missing nozzle print defects.

In multi-pass printmodes missing nozzle print defects have been addressed by passing an inkjet printhead over a section of a page multiple times, providing the opportunity for several nozzles to jet ink onto the same portion of a page to minimize the effect of one or more missing nozzles. Another manner of addressing such defects is speculative nozzle servicing in which the printer ejects ink into a service station to exercise nozzles and ensure future functionality, regardless of whether the nozzle would have produced a print defect. In single-pass printmodes, missing nozzle print defects have been addressed through the use of redundant nozzles on the printhead that can mark the same area of the page as the missing nozzle, or by servicing the missing nozzle to restore full functionality. However, the success of these solutions, particularly in the single-pass printmodes, relies on a timely identification of the missing nozzles.

EP 2 145 768 A1 discloses a liquid discharge failure detecting apparatus comprising a light-emitting element emitting a beam onto a droplet discharged from a nozzle from a direction opposite to a direction of discharge of the droplet. A light-receiving element receives a scattered light generated by scattering of the beam by the droplet. Finally, a failure detecting unit detects a liquid discharge failure of the nozzle from data of the scattered light received by the light-receiving element.

US 2009/244141 A1 discloses an orifice health detection device including a fixed array of ink ejecting orifices, the ink ejecting orifices configured to eject at least one ink drop, a light source that produces a light beam configured to scatter light from the at least one ejected ink drop, and a light detector configured to detect light scattered from the at least one ejected ink drop.

EP 1 369 238 A1 teaches a fluid ejection and scanning assembly including a drop ejection element that causes fluid to be ejected from an associated nozzle chamber when activated. A first photosensor is coupled to the ejection element and is configured to cause the ejection element to be activated when the photosensor is illuminated by a light source. A second photosensor captures image data based on light reflected from media.

US 2002/101469 A1 teaches a housing configured for removable insertion into a reciprocable carriage of a printer. A thermal ink jet print assembly is mounted in the housing and includes a nozzle plate for forming a plurality of ink dots on a print media adjacent to the housing. A light source is mounted in the housing for illuminating the print media adjacent to the housing. A sensor is mounted in the housing for receiving light reflected from the print media and generating electrical signals representative thereof.

### BRIEF DESCRIPTION OF THE DRAWINGS

The present embodiments will now be described, by way of example, with reference to the accompanying drawings, in which:
FIG. 1 shows a bottom view of an example fluid ejection device suitable for incorporating a drop detector assembly as disclosed herein, according to an embodiment;
FIG. 2 shows a side cross-sectional view of a partial drop detector assembly, according to an embodiment;
FIG. 3 shows an offset cross-sectional view of a partial drop detector assembly with respect to the FIG. 2 view, according to an embodiment;
FIG. 4 shows a light detector on a die substrate, according to an embodiment;
FIG. 5 shows a general block diagram of a drop detector assembly, according to an embodiment;
FIG. 6 shows a block diagram of a basic fluid ejection device, according to an embodiment;
FIG. 7 shows a flowchart of an example method of detecting fluid drop ejections in a fluid ejection device, according to an embodiment.

### DETAILED DESCRIPTION

### Overview of Problem and Solution

As noted above, the success of different solutions to missing nozzle print defects in inkjet printers relies on a timely identification of the missing nozzles. This is particularly true in single-pass printmodes, such as in page-wide array printing devices, where the option of passing the inkjet printhead over a section of a page multiple times generally does not exist.

Emerging inkjet printing markets (e.g., high-speed large format printing) call for higher page throughput without a decrease in print quality. This performance is achievable through the use of significantly larger printheads and single-pass printing with page-wide array printers. A consequence of the single-pass, page-wide array printing approach, however, is that the traditional multi-pass printing solution to missing nozzle print defects is not available.

In single-pass, page-wide array printing, there is a significant increase in the number print nozzles being used and a corresponding increase in the time and ink volume needed to keep the nozzles healthy. Solutions for missing nozzle print defects in single-pass print modes include the use of redundant nozzles, which are additional nozzles on the printhead that can mark the same area of the page as the missing nozzle, and servicing the missing nozzle to restore it to its full functionality.

In order for such solutions to missing nozzle print defects to be effective in single-pass print modes, the missing nozzles must be identified in a timely manner. One technique used for identifying missing nozzles is a light scatter drop detect (LSDD) method. In general, the LSDD technique enables assessment of nozzle functionality by monitoring light reflected off of fluid drops ejected from the nozzles. The LSDD technique is a scalable, cost effective drop detection solution that identifies missing nozzles and allows the printer to correct for them before they result in a print defect. The LSDD technique enables the high page throughput and print quality performance needed in emerging high-speed printing markets utilizing single-pass printing and page-wide array printheads.

Embodiments of the present disclosure improve upon prior light scattering drop detect (LSDD) techniques by integrating light detectors on the printhead silicon die. The integrated light detectors are arrayed in a manner that enables the capture of an optical signal (i.e., scattered light) corresponding to the presence or absence of fluid drops exiting inkjet nozzles. The integrated light detectors enable real-time drop/nozzle health detection and improved image printing quality for single-pass printers utilizing page-wide array printheads. The integrated LSDD may be used for image print quality improvement of multi-pass printers as well.

In one embodiment, for example, a drop detector assembly includes an ejection element formed on a die substrate to eject a fluid drop. A light detector, also formed on the substrate, is configured to detect light reflected off of the fluid drop. A detector circuit formed on the substrate is configured to provide a signal associated with the detected light, which indicates the condition of the ejected fluid drop. In another example embodiment, a method of detecting fluid drop ejections in a fluid ejection device includes ejecting a fluid drop from a nozzle formed in a transparent nozzle plate, and detecting light scattered off of the fluid drop through the transparent nozzle plate. The method also includes generating both a drop indicator signal and a dark value signal and finding their difference to determine if the nozzle is functioning properly. In another example embodiment, a drop detection system includes a fluid ejection assembly having a fluid drop ejection element integrated on a die substrate and a light detector integrated on the die substrate. An electronic controller is configured to control the ejection element to eject a fluid drop and to control the light detector to detect light scattered off of the fluid drop as the fluid drop passes through a light beam.

The invention provides a drop detector assembly according to claim 1 and a method of detecting fluid drop ejections in a fluid ejection device according to claim 6.

### Illustrative Embodiments

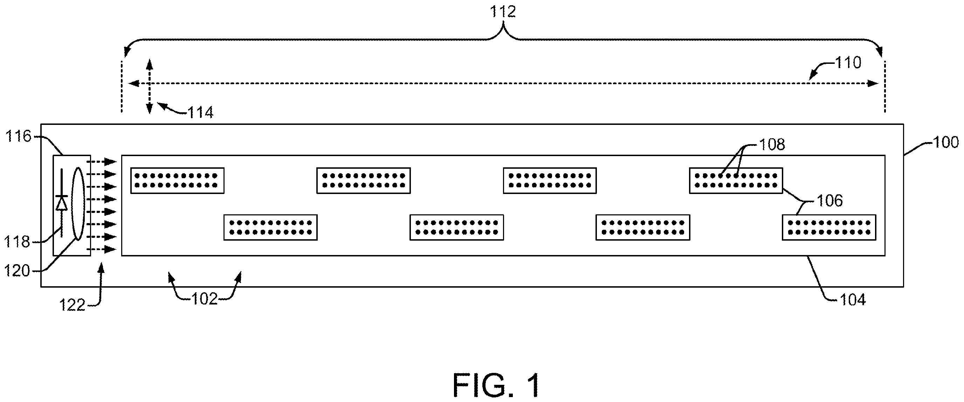

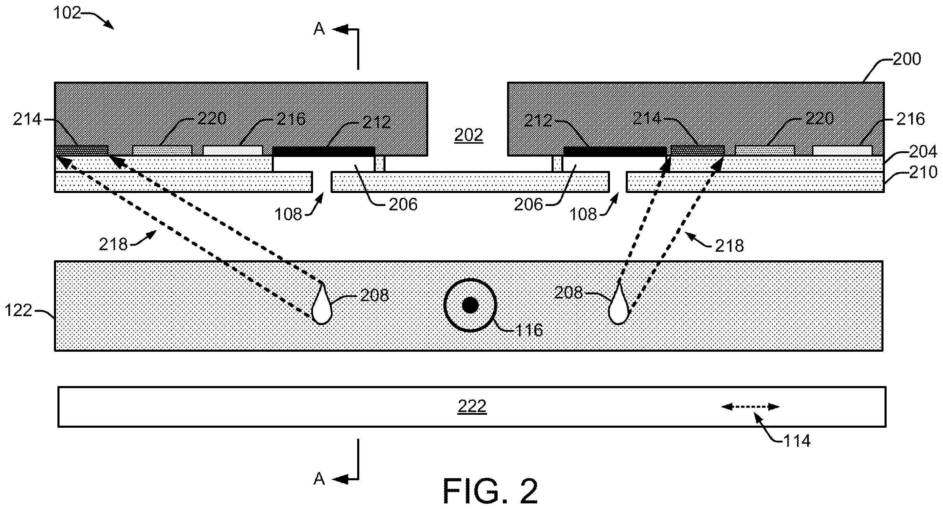

FIG. 1 shows a bottom view of an example fluid ejection device 100 suitable for incorporating a drop detector assembly 102 as disclosed herein, according to an embodiment. In this embodiment, the fluid ejection device 100 is an inkjet printer, such as a thermal or a piezo-electric inkjet printer, for example. Inkjet printer 100 includes a printhead bar 104 that carries an array of print nozzles. The printhead bar 104 includes multiple die 106 arranged in two staggered rows, and each die includes multiple individual print nozzles 108. The printhead bar 104 and array of print nozzles extend across the width 110 of a printzone 112 such that print media 222 (e.g., a sheet of paper; see FIG. 2) can move past the array of nozzles in a perpendicular direction 114 with respect to the width 110 of the printzone 112. Each print nozzle 108 is configured to eject ink in a sequenced manner to cause characters, symbols, and/or other graphics or images to be printed on the print media 222 as it moves relative to the stationary printhead bar 104 in the perpendicular direction 114. Accordingly, in this embodiment, fluid ejection device (inkjet printer) 100 can be referred to as a page-wide array printer having a fixed or stationary printhead bar 104 and array of print nozzles. However, although inkjet printer 100 is generally described herein as being a page-wide array printer, it is not limited to being a page-wide array printer, and in other embodiments it may be configured, for example, as a scanning type inkjet printing device.

Fluid ejection device 100 also includes a light source 116, such as a collimated light source. Light source 116 may be a light emitting diode 118 or a laser, for example, and it may include optics or a collimator 120 such as a lens or curved mirror. Light source 116 is configured to project a beam of light 122 across the array of print nozzles 108 in printhead bar 104 in the space between the nozzles and the print media 222. Although any shape of light beam 122 may be used, a rectangular cross-sectional shaped light beam 122 is shown in the described embodiments for the purpose of illustration (e.g., see FIG. 2). Light source 116 generally functions in conjunction with and/or as part of a drop detector assembly 102 to provide light that reflects off of ejected fluid drops and into light detectors, as discussed below. Although only a single light source 116 is illustrated and discussed, different embodiments can include additional light sources depending, for example, on the power of the light source, the intensity of light needed to provide adequate reflection of light off of fluid drops ejected from nozzles 108, and so on.

FIG. 2 shows a side cross-sectional view of a partial drop detector assembly 102, according to an embodiment of the disclosure. Drop detector assembly 102 generally includes a fluid ejection assembly having additional drop detection elements that together make up drop detector assembly 102. Therefore, drop detector assembly 102 includes a die substrate 200 with a fluid slot 202 formed therein. The fluid slot 202 is an elongated slot that extends into the plane of FIG. 2, and is in fluid communication with a fluid supply (not shown), such as a fluid reservoir. Substrate 200 is a silicon die substrate that can be formed from SOI (silicon on insulator) wafers in standard micro-fabrication processes that are well-known to those skilled in the art (e.g., electroforming, laser ablation, anisotropic etching, sputtering, dry etching, photolithography, casting, molding, stamping, and machining). Therefore, substrate 200 can include silicon dioxide (SiO2) layers (not shown) that provide a mechanism for achieving accurate etch depths during fabrication of features such as the fluid slot 202.

A chamber layer 204 disposed on the substrate 200 includes a chamber 206 formed therein to contain ejection fluid (e.g., ink) from fluid slot 202 prior to the ejection of a fluid drop 208. A nozzle plate 210 is disposed over the chamber layer 204 and forms the top of chamber 206. The nozzle plate 210 includes a nozzle 108 through which fluid drops are ejected. Both the chamber layer 204 and nozzle plate 210 are formed of a transparent SU8 material commonly used as a photoresist mask for fabrication of semiconductor devices. An ejection element 212 formed on substrate 200 at the bottom side of chamber 206 activates to eject a drop of fluid 208 out of the chamber 206 and through nozzle 108. Ejection element 212 can be any device capable of operating to eject fluid drops 208 through the corresponding nozzle 108, such as a thermal resistor or piezoelectric actuator. In the illustrated embodiment, ejection element 212 is a thermal resistor formed of a thin film stack fabricated on top of the substrate 200. The thin film stack generally includes an oxide layer, a metal layer defining the ejection element 212, conductive traces, and a passivation layer (not individually shown).

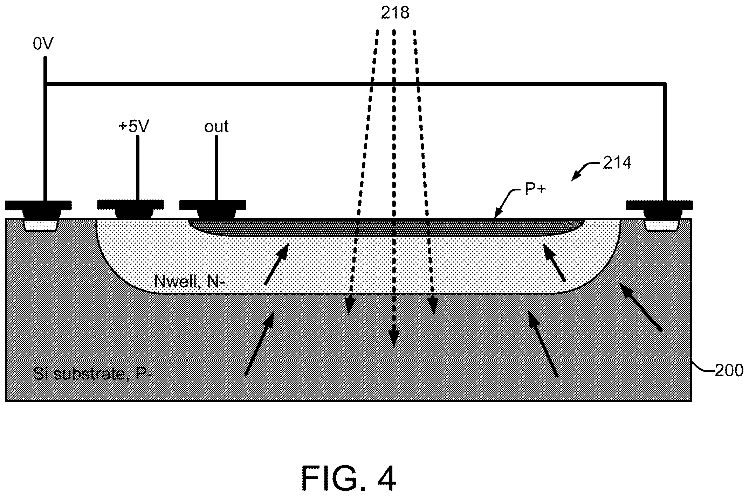

Drop detector assembly 102 also includes a light detector 214 fabricated on the die substrate 200. Light detectors 214 are disposed underneath both the transparent nozzle plate 210 and the transparent chamber layer 204. In different embodiments, light detector 214 can be, for example, a photodetector, a charge-coupled device (CCD), or other similar light sensing devices. Light detector 102 is generally configured to receive scattered light reflecting off a fluid drop 208 and to generate an electrical signal that is representative of the scattered light. One embodiment of a light detector 214 is discussed in greater detail below with regard to FIG. 4.

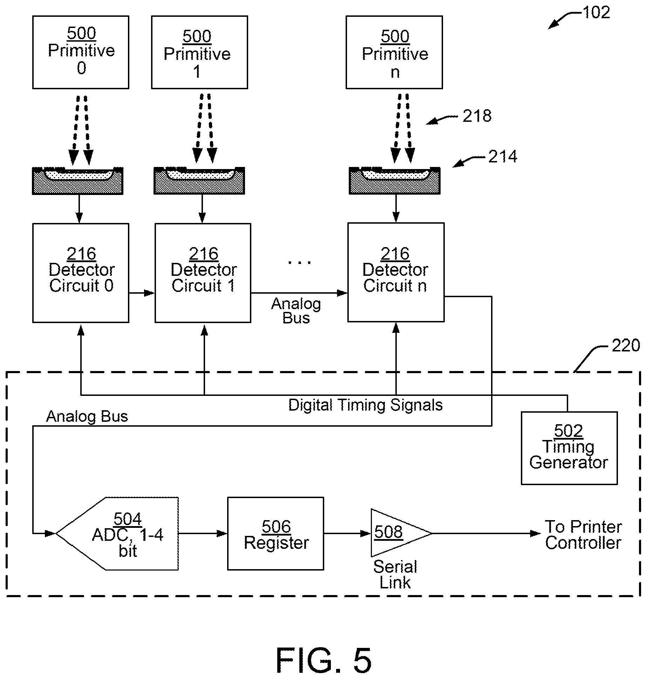

A detector circuit 216 is associated with each light detector 214 and is also formed on substrate 200 to support each light detector 214. The light source 116 projects a light beam 122 toward the viewer and out of the plane of FIG. 2. As noted above, the illustrated light beam 122 has a rectangular cross-sectional shape. The light beam 122 travels the length of printhead bar 104 across the array of print nozzles 108 in the space between the nozzles 108 and the print media 222 (the print media 222 travels in a perpendicular direction 114 relative to the light beam 122 and printhead bar 104 (FIG. 1)). As an ejected fluid drop 208 travels through the light beam 122, light is reflected off the drop 208 and scatters in a direction back toward the light source 116. Some of the back-scattered light (generally shown by dotted arrows 218) penetrates through the transparent nozzle plate 210 and chamber layer 204 and is absorbed or captured by light detector 214. The drop detector assembly 102 also includes timing and bus circuitry 220 formed on the substrate 200, which facilitates timing for the capture of back-scattered light through the detector circuits 216, and for the readout of data from the detector circuits 216, as discussed below in greater detail with respect to FIG. 5.

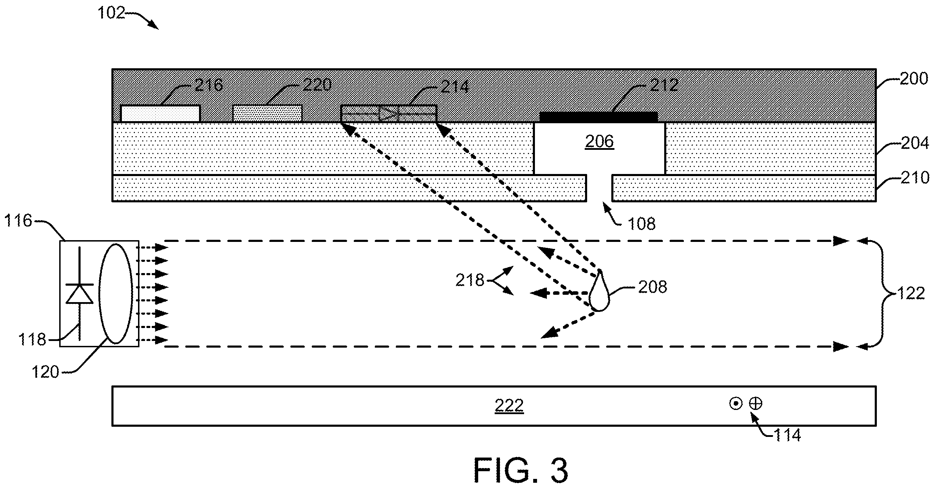

It is apparent that in order to absorb or capture back-scattered light from a fluid drop 108, a light detector 214 should be located on the substrate 200 somewhere between the light source 116 and the nozzle 108 that ejects the fluid drop 108. Accordingly, although the light detectors 214 in FIG. 2 appear to be on substrate 200 in a position that is within the same plane as nozzles 108, they are actually somewhat behind the nozzles 108 (i.e., set into the plane of FIG. 2) in a position that is closer to the light source 116 than the nozzles 108. The relative positions of the light source 116, a detector 214, and a nozzle 108 are more clearly viewed in FIG. 3, discussed below.

The embodiment illustrated in FIG. 2 also appears to depict a separate light detector 214 disposed on substrate 200 to monitor each nozzle 108 (i.e., a light detector 214 for each nozzle 108). Although such a configuration is possible, such a high number of light detectors 214 is not necessary and would generally not be desirable because of the increased cost of fabricating each detector 214 and its associated detector circuit 216, and because of the increased amount of space that would be needed to accommodate each detector 214 and its associated detector circuit 216. Thus, the FIG. 2 illustration is shown in order to facilitate the present description rather than to necessarily indicate that each nozzle 108 has a separate associated light detector 214. Accordingly, additional implementations can include, for example, having a single light detector 214 disposed on substrate 200 to monitor a plurality of nozzles 108, such as a primitive grouping 500 (see FIG. 5) of nozzles 108. A primitive grouping 500 of nozzles 108 may include, for example, 8 to 16 nozzles whereby a single light detector 214 can be disposed to monitor all the nozzles 108 in the primitive group of nozzles.

FIG. 3 shows an offset cross-sectional view of a partial drop detector assembly 102 taken looking in toward line A-A of FIG. 2, according to an embodiment of the disclosure. This view is intended to be a transparent view in order to illustrate the drop detector 102 components (i.e., light detector 214, detector circuit 216, timing and bus circuitry 220, fluid chamber 206, ejection element 212) and it is generally orthogonal with respect to the view of the detector assembly 102 shown in FIG. 2. It is noted that the components (i.e., light detector 214, detector circuit 216, timing and bus circuitry 220, fluid chamber 206, ejection element 212) shown in FIG. 3 are not all in the same plane. In general, light detectors 214 are arrayed along the length of printhead bar 104 among the multiple die 106 (FIG. 1), such that they provide the maximum capture of the optical signal (i.e., scattered light) corresponding to the presence or absence of fluid drops 208 exiting inkjet nozzles 108. The cross-sectional orthogonal view of drop detector assembly 102 in FIG. 3, however, better illustrates relative positions for the light source 116, a detector 214, and a nozzle 108 in the assembly 102. In this view, the light source 116 at the left of FIG. 3 is at one end of the printhead bar 104 (FIG. 1). Note that the print media 222 moves in a perpendicular direction 114 (i.e., into or out of the plane of FIG. 3) relative to the light beam 122 and printhead bar 104 (FIG. 1). The detector 214 that detects back-scattered light 218 reflected off fluid drop 208 is located between the nozzle 108 and the light source 116. Farther to the right of nozzle 108 in FIG. 3 can be additional nozzles 108 that the detector 214 can also monitor. The point, however, is that for nozzles 108 being monitored by a particular detector 214, the detector 214 should be located on the substrate 200 between the light source 116 and the nozzles 108, because the light reflected off of fluid drops 208 from those nozzles 108 reflects back toward the light source 116 (i.e., to the left in FIG. 3) and not away from the light source (i.e., to the right in FIG. 3).

FIG. 4 shows a light detector 214 on a die substrate 200, according to an embodiment of the disclosure. As noted above, a light detector 214 is fabricated on substrate 200, and thus positioned underneath both the transparent nozzle plate 210 and the transparent chamber layer 204. The detector 214 is implemented using standard CMOS process steps, and in one embodiment (e.g., FIG. 4) the process uses a high resistivity substrate, rather than EPI on a low resistance substrate in order to reduce costs. Because of the long lifetime and long diffusion length in such a substrate, the detector in this embodiment uses an N-well to p-plus diode. The N-well is then biased such that the N-well is reverse biased to the substrate. This allows carriers generated elsewhere in the substrate to be captured as a photocurrent that is drawn off to the +5V power supply connection, shown in FIG. 4 as "+5V." The detector element is the junction between the "out" terminal and the N-well. The "out" terminal is biased, for example, between 0V and 2.5V. This bias level ensures enough back bias to reduce the capacitance of the junction, which is proportional to bias. Carriers generated in the N-well are captured by the detector junction and are then available as a sensing photocurrent on the "out" terminal of the detector 214.

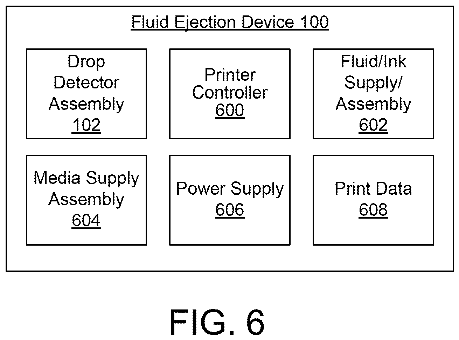

FIG. 5 shows a general block diagram of a drop detector assembly 102, according to an embodiment of the disclosure. For each nozzle primitive group 500 in assembly 102, there is a corresponding light detector 214 and detector circuit 216, all formed on printhead die substrate 200. The timing and bus circuitry 220 is also formed on the die substrate 200. Each primitive 500 represents, for example, a group of eight nozzles 108 and related circuitry for controlling the drop ejection function of the nozzles. Timing generator 502 provides timing signals to control when and how long each detector circuit 216 integrates photocurrent from a corresponding light detector 214 as the detector 214 captures or absorbs back-scatter light 218 reflected off of a fluid drop. Timing generator 502 controls the photocurrent integration time based on print data 608 (FIG. 6) from a printer controller 600 (FIG. 6) that informs the timing generator 502 which nozzle 108 in which primitive 500 is ejecting a fluid drop 208 at a given moment. During the integration period, the detector circuit 216 integrates photocurrent and transforms it into a voltage. The timing generator 502 then reads out the voltage from the detector circuit 216 onto an analog bus. Thus, at an appropriate time when a nozzle 108 in a particular primitive 500 ejects a fluid drop 208, the timing generator 502 resets the appropriate detector circuit 216, begins and ends an integration period for the detector circuit 216, and reads out the voltage from the detector circuit 216 onto the analog bus.

The timing generator 502 also times and controls the placement of the output voltage from each detector circuit 216 onto the analog bus. Each voltage placed on the analog bus is converted by an analog-to-digital-converter 504 (ADC) into a digital value. The digital value from each detector circuit 216 is placed in register 506, and transmitted to the printer controller 600 through serial link 508. By collecting and monitoring back-scattered light 218, or a lack thereof, at appropriate times corresponding to when the ejection of fluid drops 208 is expected (i.e., through correlation with print data from printer controller 600), a determination can be made as to whether a nozzle 108 is ejecting fluid drops 208. Thus, a determination can be made as to whether a nozzle is clogged, for example. In addition, the information gathered from the back-scattered light 218 can also enable determinations regarding the size and quality of a fluid drop 208, which can indicate the level of health in a nozzle. For example, this information can indicate whether a nozzle may be partially clogged. The printer controller 600 or printer writing system, for example, can then take corrective action to cover up for degraded or non-working print nozzles, such as by using print defect hiding algorithms.

FIG. 6 shows a block diagram of a basic fluid ejection device 100, according to an embodiment of the disclosure. The fluid ejection device 100 includes drop detector assembly 102 and an electronic printer controller 600. Drop detector assembly 102 generally includes a fluid ejection assembly having additional drop detection elements that together make up drop detector assembly 102. Printer controller 600 typically includes a processor, firmware, and other electronics for communicating with and controlling drop detector assembly 102 to eject fluid droplets in a precise manner and to detect the ejection of the fluid drops.

In one embodiment, fluid ejection device 100 is an inkjet printing device. As such, fluid ejection device 100 can also include a fluid/ink supply and assembly 602 to supply fluid to drop detector assembly 102, a media supply assembly 604 to provide media for receiving patterns of ejected fluid droplets, and a power supply 606. In general, printer controller 102 receives print data 608 from a host system, such as a computer. The print data 608 represents, for example, a document and/or file to be printed, and it forms a print job that includes one or more print job commands and/or command parameters. From the print data 608, printer controller 600 defines a pattern of drops to eject which form characters, symbols, and/or other graphics or images.

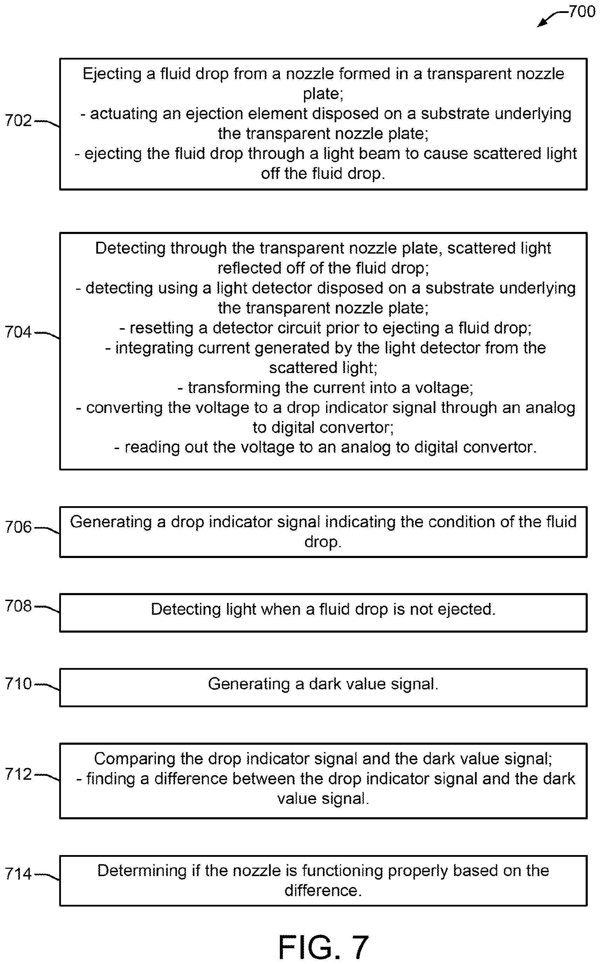

FIG. 7 shows a flowchart of an example method 700 of detecting fluid drop ejections in a fluid ejection device, according to an embodiment of the disclosure. Method 700 is associated with the embodiments of a drop detector assembly 102 discussed above with respect to illustrations in FIGS. 2-6. Although method 700 includes steps listed in a certain order, it is to be understood that this does not limit the steps to being performed in this or any other particular order.

Method 700 begins at block 702 with ejecting a fluid drop from a nozzle formed in a transparent nozzle plate. The nozzle that ejects the fluid drop is formed in the transparent nozzle plate and is grouped with other nozzles into a primitive. The fluid drop is ejected by actuating an ejection element disposed on a printhead die substrate underlying the transparent nozzle plate. Ejecting a fluid drop is ejecting the fluid drop through a light beam to cause scattered light off of the drop.

The method 700 continues at block 704 with detecting scattered light through the transparent nozzle plate reflected off of the fluid drop. The detecting of the scattered light is done using a light detector that is disposed or integrated on the die substrate under the transparent nozzle plate. Thus, the scattered light travels through the transparent nozzle plate to reach the detector. The scattered light also travels through a transparent chamber layer to reach the detector. In general, detection includes monitoring a column of light detectors integrated on the die substrate and located along a printhead bar. Each integrated light detector has an associated primitive of nozzles that it is monitoring, and each integrated light detector is configured to capture back-scattered light that reflects off fluid drops through the transparent nozzle plate (and through the transparent chamber layer).

The process of detecting the scattered light also includes resetting a detector circuit prior to the ejection of the fluid drop, and integrating photocurrent generated by the light detector from the scattered light using the detector circuit. Print data from a printer controller informs a timing generator integrated on the die substrate when a particular nozzle in a particular primitive is scheduled to eject a fluid drop. The timing generator resets the detector circuit associated with the appropriate light detector in preparation for the drop ejection, and then starts the monitoring of back-scattered light from the ejected fluid drop at the appropriate time by starting the integration of photocurrent through the detector circuit. The detector circuit integrates the photocurrent from light detector and transforms it into a voltage. The timing generator ends the integration period and reads out the voltage from the detector circuit onto an analog bus.

The method 700 continues at block 706 with generating a drop indicator signal from the detector circuit voltage output onto the analog bus. The voltage is converted into a digital drop indicator signal by an analog to digital convertor. The drop indicator signal represents the condition of the fluid drop. The drop indicator signal is placed in a register and transmitted to the printer controller through a serial link.

The method 700 continues at block 708 with detecting light when a fluid drop is not ejected. Detecting light when a fluid drop is not ejected follows the same general process as discussed with regard to detecting the scattered light from an ejected fluid drop. At block 710, a dark value signal is generated through the ADC based on detector circuit voltage from the light detected when a fluid drop is not ejected. In general, the timing generator controls the generation of a dark value signal, which is transmitted to the printer controller for comparison with the drop indicator signal. The dark value signal is a measure of background light that is present when there is no fluid drop traveling through the light beam.

At block 712 of method 700, the drop indicator signal and the dark value signal are compared and/or subtracted to find their difference. At block 714 the printer controller or writing system determines if the nozzle is functioning properly based on the difference. In general, this process for determining nozzle health can be repeated for each nozzle in each primitive to determine the general health of each nozzle, and corrective action such as running print defect hiding algorithms can be implemented to cover up for degraded or non-working print nozzles.

## Claims

1. A drop detector assembly (102) comprising:
an ejection element (212) formed on a substrate (200) underlying a transparent nozzle plate (210) and configured to eject a fluid drop (208) from a nozzle (108) formed in the transparent nozzle plate (210);
a light source (116) configured to project a light beam to scatter light off of the fluid drop (208); and
a light detector (214) formed on the substrate (200) underlying the transparent nozzle plate (210) and configured to detect light scattered off of the fluid drop (208).

2. A drop detector assembly (102) as in claim 1, further comprising a detector circuit (216) formed on the substrate (200) to provide a signal associated with the detected light, the signal indicating a condition of the ejected fluid drop (208).

3. A drop detector assembly (102) as in claim 2, further comprising a controller (600) to control the ejection element (212), determine the condition of the ejected fluid drop (208) based on the signal, and correlate the condition with the ejection element (212).

4. A drop detector assembly (102) as in claim 2, wherein the signal is current and the detector circuit (216) is configured to integrate the current and transform the current into voltage, the drop detector assembly (102) further comprising:
a timing generator (502) to control detector circuit integration time and transfer of the voltage to an analog to digital convertor (ADC) (504) via an analog bus; and
the ADC (504) to convert the voltage into a digital signal.

5. A drop detector assembly (102) as in claim 1, wherein the light detector (214) is positioned between the drop ejection element (212) and the light source (116) so as to be configured to absorb back-scattered light from the fluid drop (208).

6. A method of detecting fluid drop ejections in a fluid ejection device comprising:
ejecting (702) a fluid drop (208) from a nozzle (108) formed in a transparent nozzle plate (210) comprising actuating an ejection element (212) disposed on a substrate (200) underlying the transparent nozzle plate (210); and
detecting (704) through the transparent nozzle plate (210), scattered light reflected off of the fluid drop (208) using a light detector (214) disposed on the substrate (200) underlying the transparent nozzle plate (210).

7. A method as in claim 6, further comprising generating (706) a drop indicator signal indicating the condition of the fluid drop (208).

8. A method as in claim 7, further comprising:
detecting light (708) when a fluid drop (208) is not ejected;
generating (710) a dark value signal based on light detected when a fluid drop (208) is not ejected;
finding (712) a difference between the drop indicator signal and the dark value signal; and
determining (714) if the nozzle (108) is functioning properly based on the difference.

9. A method as in claim 6, wherein ejecting (702) a fluid drop (208) comprises ejecting the fluid drop (208) through a light beam to cause the scattered light.

10. A method as in claim 6, further comprising transforming current from the detector into voltage.

11. A method as in claim 6, wherein detecting (704) comprises:
resetting a detector circuit prior to the ejecting a fluid drop (208);
integrating current generated by the light detector (214) from the scattered light;
transforming the current into a voltage;
converting the voltage to a drop indicator signal through an analog to digital convertor; and
transmitting the drop indicator signal to a printer controller.

## Patentansprüche

1. Tropfendetektoranordnung (102), Folgendes umfassend:
ein Ausstoßelement (212), das auf einem Substrat (200), das unter einer transparenten Düsenplatte (210) liegt, ausgebildet ist und konfiguriert ist, um einen Fluidtropfen (208) aus einer in einer transparenten Düsenplatte (210) ausgebildeten Düse (108) auszustoßen;
eine Lichtquelle (116), die konfiguriert ist, um einen Lichtstrahl zu projizieren, um Licht von dem Fluidtropfen (208) weg zu streuen; und
ein Lichtdetektor (214), der auf dem Substrat (200), das unter der transparenten Düsenplatte (210) liegt, ausgebildet und konfiguriert ist, um das von dem Fluidtropfen (208) gestreute Licht zu erfassen.

2. Tropfendetektoranordnung (102) nach Anspruch 1, ferner umfassend eine auf dem Substrat (200) ausgebildete Detektorschaltung (216), um ein dem erfassten Licht zugeordnetes Signal bereitzustellen, wobei das Signal einen Zustand des ausgestoßenen Fluidtropfens (208) anzeigt.

3. Tropfendetektoranordnung (102) nach Anspruch 2, ferner umfassend eine Steuerung (600), um das Ausstoßelement (212) zu steuern, den Zustand des ausgestoßenen Fluidtropfens (208) basierend auf dem Signal zu bestimmen und den Zustand mit dem Ausstoßelement (212) zu korrelieren.

4. Tropfendetektoranordnung (102) nach Anspruch 2, wobei das Signal Strom ist und die Detektorschaltung (216) konfiguriert ist, um den Strom zu integrieren und
den Strom in Spannung umzuwandeln, wobei die Tropfendetektoranordnung (102) ferner Folgendes umfasst:
einen Zeitgeber (502), um die Integrationszeit der Detektorschaltung und die Übertragung der Spannung auf einen Analog-Digital-Wandler (ADC) (504) über einen Analogbus zu steuern; und
den ADC (504), um die Spannung in ein digitales Signal umzuwandeln.

5. Tropfendetektoranordnung (102) nach Anspruch 1, wobei der Lichtdetektor (214) zwischen dem Tropfenausstoßelement (212) und der Lichtquelle (116) so positioniert ist, dass er konfiguriert werden kann, um rückgestreutes Licht aus dem Fluidtropfen (208) zu absorbieren.

6. Verfahren zum Erfassen von Fluidtropfenausstößen bei einer Fluidausstoßvorrichtung, Folgendes umfassend:
Ausstoßen (702) eines Fluidtropfens (208) aus einer Düse (108), die in einer transparenten Düsenplatte (210) ausgebildet ist, umfassend das Betätigen eines Ausstoßelements (212), das auf einem Substrat (200) angeordnet ist, das unter der transparenten Düsenplatte (210) liegt; und
Erfassen (704) von gestreutem Licht, das von dem Fluidtropfen (208) reflektiert wird, durch die transparente Düsenplatte (210) unter Verwendung eines Lichtdetektor (214), der auf dem Substrat (200) angeordnet ist, das unter der transparenten Düsenplatte (210) liegt.

7. Verfahren nach Anspruch 6, ferner umfassend das Erzeugen (706) eines Tropfenindikatorsignals, das den Zustand des Fluidtropfens (208) anzeigt.

8. Verfahren nach Anspruch 7, ferner Folgendes umfassend:
Erfassen von Licht (708), wenn ein Fluidtropfen (208) nicht ausgestoßen wird;
Erzeugen (710) eines Dunkelwertsignals basierend auf Licht, das erfasst wird, wenn ein Fluidtropfen (208) nicht ausgestoßen wird;
Finden (712) einer Differenz zwischen dem Tropfenindikatorsignal und dem Dunkelwertsignal; und
Bestimmen (714), auf der Basis der Differenz, ob die Düse (108) ordnungsgemäß funktioniert.

9. Verfahren nach Anspruch 6, wobei das Ausstoßen (702) eines Fluidtropfens (208) ein Ausstoßen des Fluidtropfens (208) durch einen Lichtstrahl umfasst, um das gestreute Licht zu verursachen.

10. Verfahren nach Anspruch 6, ferner umfassend das Umwandeln von Strom aus dem Detektor in Spannung.

11. Verfahren nach Anspruch 6, wobei das Erfassen (704) Folgendes umfasst:
Zurücksetzen einer Detektorschaltung vor dem Ausstoßen eines Fluidtropfens (208);
Integrieren des vom Lichtdetektor (214) aus dem gestreuten Licht erzeugten Stroms;
Umwandeln des Stroms in eine Spannung;
Umwandeln der Spannung in ein Tropfenindikatorsignal durch einen Analog-Digital-Wandler; und
Übertragen des Tropfenindikatorsignals an eine Druckersteuerung.

## Revendications

1. Ensemble détecteur de goutte (102) comprenant :
un élément d'éjection (212) formé sur un substrat (200) situé sous une plaque de buses transparente (210) et configuré pour éjecter une goutte de fluide (208) à partir d'une buse (108) formée dans la plaque de buses transparente (210) ;
une source de lumière (116) configurée pour projeter un faisceau lumineux afin de disperser la lumière de la goutte de fluide (208) ; et
un détecteur de lumière (214) formé sur le substrat (200) situé sous la plaque de buses transparente (210) et configuré pour détecter la lumière dispersée de la goutte de fluide (208).

2. Ensemble détecteur de goutte (102) selon la revendication 1, comprenant en outre un circuit de détection (216) formé sur le substrat (200) pour fournir un signal associé à la lumière détectée, le signal indiquant une condition de la goutte de fluide éjectée (208).

3. Ensemble détecteur de goutte (102) selon la revendication 2, comprenant en outre un dispositif de commande (600) pour commander l'élément d'éjection (212), déterminer la condition de la goutte de fluide éjectée (208) sur la base du signal, et corréler la condition avec l'élément d'éjection (212).

4. Ensemble détecteur de goutte (102) selon la revendication 2, dans lequel le signal est le courant et le circuit de détection (216) est configuré pour intégrer le courant et transformer le courant en tension, l'ensemble détecteur de goutte (102) comprenant en outre :
une minuterie (502) pour commander le temps d'intégration de circuit de détection et le transfert de la tension à un convertisseur analogique-numérique (CAN) (504) par l'intermédiaire d'un bus analogique ; et
le CAN (504) servant à convertir la tension en un signal numérique.

5. Ensemble détecteur de goutte (102) selon la revendication 1, dans lequel le détecteur de lumière (214) est positionné entre l'élément d'éjection de goutte (212) et la source de lumière (116) de manière à être configuré pour absorber la lumière rétrodiffusée depuis la goutte de fluide (208).

6. Procédé de détection d'éjections de goutte de fluide dans un dispositif d'éjection de fluide comprenant :
l'éjection (702) d'une goutte de fluide (208) à partir d'une buse (108) formée dans une plaque de buses transparente (210) comprenant l'actionnement d'un élément d'éjection (212) disposé sur un substrat (200) situé sous la plaque de buses transparente (210) ; et
la détection (704) à travers la plaque de buses transparente (210) de la lumière dispersée réfléchie par la goutte de fluide (208) en utilisant un détecteur de lumière (214) disposé sur le substrat (200) situé sous la plaque de buses transparente (210).

7. Procédé selon la revendication 6, comprenant en outre la génération (706) d'un signal indicateur de goutte indiquant la condition de la goutte de fluide (208).

8. Procédé selon la revendication 7, comprenant en outre :
la détection de lumière (708) lorsqu'une goutte de fluide (208) n'est pas éjectée ;
la génération (710) d'un signal de valeur d'obscurité sur la base de la lumière détectée lorsqu'une goutte de fluide (208) n'est pas éjectée ;
la découverte (712) d'une différence entre le signal indicateur de goutte et le signal de valeur d'obscurité ; et
le fait de déterminer (714) si la buse (108) fonctionne correctement sur la base de la différence.

9. Procédé selon la revendication 6, dans lequel l'éjection (702) d'une goutte de fluide (208) comprend l'éjection de la goutte de fluide (208) à travers un faisceau lumineux pour entraîner la lumière dispersée.

10. Procédé selon la revendication 6, comprenant en outre la transformation du courant provenant du détecteur en tension.

11. Procédé selon la revendication 6, dans lequel la détection (704) comprend :
la réinitialisation d'un circuit de détection avant l'éjection d'une goutte de fluide (208) ;
l'intégration du courant généré par le détecteur de lumière (214) à partir de la lumière dispersée ;
la transformation du courant en une tension ;
la conversion de la tension en un signal indicateur de goutte à travers un convertisseur analogique-numérique ; et
la transmission du signal indicateur de goutte à un dispositif de commande d'imprimante.
